# EUROPÄISCHE PATENTANMELDUNG

(11) **EP 0 718 242 A2**
(43) Veröffentlichungstag der Anmeldung: **26.06.1996**
(21) Anmeldenummer: 95119891.0
(22) Anmeldetag: 16.12.1995
(51) Int. Cl.: C03B 5/033, C03B 5/193, C03B 5/20, C03B 5/26, C03C 1/00, B09B 3/00, A62D 3/00

(54) **Verfahren und Vorrichtung zum Abtrennen von Galle bei Schmelzprozessen von Glas**

(30) Priorität: 25.12.1994 DE 4446575
(71) Anmelder: Beteiligungen Sorg GmbH & Co. KG, D-97816 Lohr (DE)
(72) Erfinder: Pieper, Helmut, Dipl.-Ing., D-97816 Lohr am Main (DE); Rott, Lothar, D-97816 Lohr am Main (DE); Bucar, Matjaz, D-97816 Lohr am Main (DE)
(74) Vertreter: Zapfe, Hans, Dipl.-Ing.

(57) **Zusammenfassung**

Beim Schmelzen von Glas unter Bildung einer auf der Glasschmelze (9) schwimmenden Galleschicht (11), insbesondere beim Verglasen von Schadstoffen aus der Gruppe Asbest, Flugasche, Filterstäube, wird ein elektrisch beheizter Wannen-Schmelzofen verwendet, dessen Wanne (1) mit einer Abzugsöffnung (6) für die Glasschmelze und mit einem Überlaufkanal (12) mit einer Eintrittsöffnung (13) für die Galle versehen ist. Dabei erzeugt man in der Schmelze (9) einen Strom von aufsteigenden Gasblasen (22). Zum Zwecke einer besseren und automatischen Galleabfuhr erzeugt man den Strom der Gasblasen (22) unmittelbar vor dem Überlaufkanal (12) und unterhält im Überlaufkanal (12) eine Schicht flüssiger Galle (11) sowie eine durch ein Wehr (14) zurückgehaltene Bodenschicht (23) von geschmolzenem Glas. Weiterhin stellt man im Überlaufkanal (12) eine Temperatur ein, die über der Schmelztemperatur der Galle (11) liegt. Dabei wird die Bodenschicht (23) des Glases auf einer Temperatur gehalten, bei der die Viskosität des Glases so hoch ist, daß das Glas nicht aus dem Überlaufkanal (12) austritt.

## Beschreibung

Die Erfindung betrifft ein Verfahren zum Schmelzen von Glas unter Bildung einer auf der Glasschmelze schwimmenden Galleschicht in elektrisch beheizten Wannen-Schmelzöfen mit einer Abzugsöffnung für die Glasschmelze, insbesondere beim Verglasen von Schadstoffen aus der Gruppe Asbest, Flugasche, Filterstäube, mittels eines mit der Wanne verbundenen Überlaufkanals mit einer Eintrittsöffnung für den Überlauf der Galle, wobei man in der Schmelze einen Strom von aufsteigenden Gasblasen erzeugt und dadurch eine Ansammlung von flüssiger Galle herbeiführt.

Beim Herstellen bestimmter Glasarten, insbesondere aber beim Verglasen von Schadstoffen der angegebenen Art entsteht auf und in der Glasschmelze sogenannte "Galle". Nach dem Lexikon "ABC Glas", 2. Auflage, 1991, handelt es sich bei Galle um Alkalisulfate, die dann auftreten, wenn die Glasschmelze bereits mit Alkalisulfaten gesättigt ist. Es wurde aber auch festgestellt, daß sich in der Galle auch Anteile von Sulfaten und Chloriden von Alkali- oder Erdalkalimetallen befinden. Die Galle sammelt sich teilweise an der Oberfläche der Glasschmelze, befindet sich aber auch in Form von Tropfen und Tröpfchen innerhalb der Glasschmelze. Bei der Galle handelt es sich mithin um wasserlösliche Salze, die beim Produktionsprozeß, insbesondere aber beim Verglasen von Schadstoffen äußerst unerwünscht sind.

Durch die DE-PS 38 41 918 ist es bekannt, im Strömungsweg einer Glasschmelze eine Trennwand anzuordnen, vor der die Galle angestaut wird und unter der die Glasschmelze zu einem Entnahmeteil des Ofens hindurchströmen kann. Der Gallestau gelingt aber nur für die sogenannte Oberflächengalle, nicht aber für in der Glasschmelze suspendierte Galletropfen. Der Abzug der Oberflächengalle erfolgt über eine seitlich vor der Trennwand angeordnete, auf dem Umfang beheizte Abzugsöffnung. Um die Oberflächengalle von dem Beschickungsgut, dem sogenannten Gemenge, zu trennen, ist vor der besagten Trennwand eine weitere Trennwand angeordnet, vor der sich nicht aufgeschmolzenes Gemenge staut. Die Reihenfolge der besagten Trennwände bedingt eine entsprechende Baulänge desjenigen Ofenteils, aus dem die Galle einerseits und die Glasschmelze andererseits abgezogen werden.

Bei einer vollelektrisch beheizten Wanne, bei der die Temperatur der Oberfläche normalerweise unter der Temperatur der sich ausbildenden Galle liegt, ist ein gezieltes Auslaufen der Galle nicht mehr zu erreichen.

Durch die W0 93/02974 ist es bekannt, in der Mitte zwischen plattenförmigen Elektroden einen Strom oder drei Ströme aufsteigender sauerstoffhaltiger Gasblasen zu erzeugen, um den elektrischen Widerstand der Glasschmelze zu erhöhen und brennbare Komponenten des Beschickungsgutes zu verbrennen. Dadurch werden auch in der Schmelze suspendierte Galletropfen beschleunigt der auf der Schmelze schwimmenden Galleschicht zugeführt. Seitlich angesetzte Überlaufkanäle sind mit sogenannten Einfrierventilen versehen, um den Galleauslauf temperaturunabhängig steuern zu können. Wegen der schlechten Wärmeleitfähigkeit der Galle verlaufen jedoch Einfrieren und Auftauen der Galle sehr langsam, so daß die Betriebsintervalle für die Galleabfuhr entsprechend lang sind. Auch durch eine thermostatische Steuerung dieser Einfrierventile kann ein automatischer Galleauslauf nicht erreicht werden. Durch den zentralen Aufstieg der Gasblasen werden Galle und Beschickungsgut auseinandergetrieben, so daß ein Teil der Galle vom Überlaufkanal ferngehalten wird.

Der Erfindung liegt daher die Aufgabe zugrunde, ein Verfahren der eingangs beschriebenen Gattung anzugeben, bei dem sich ein größerer Anteil der Galle an der Oberfläche sammelt und bei dem ein gezieltes Auslaufen der gesamten Galle möglich ist.

Die Lösung der gestellten Aufgabe erfolgt bei dem eingangs angegebenen Verfahren erfindungsgemäß dadurch, daß man den Strom aufsteigender Gasblasen unmittelbar vor dem Überlaufkanal erzeugt und im Überlaufkanal eine Schicht flüssiger Galle und eine durch ein Wehr zurückgehaltene Bodenschicht von geschmolzenem Glas unterhält und im Überlaufkanal eine Temperatur einstellt, die über der Schmelztemperatur der Galle liegt, dabei aber die Bodenschicht des Glases auf einer Temperatur hält, bei der die Viskosität des Glases so hoch ist, daß das Glas nicht aus dem Überlaufkanal austritt.

Durch den erfindungsgemäßen Strömungsweg der Gasblasen wird eine gezielte Aufwärtsbewegung der Glasschmelze erzeugt, durch die nicht nur suspendierte Galletropfen an die Oberfläche und in die Oberflächengalle transportiert werden, sondern durch die auch der Oberflächenbereich der Glasschmelze unmittelbar vor dem Überlaufkanal der Galle ständig mit heißem Glas versorgt wird. Dadurch sammelt sich die Galle bevorzugt an dieser Stelle an und kann beim Überschreiten einer bestimmten Schichtdicke selbsttätig aus dem Überlaufkanal austreten. Durch die erfindungsgemäßen Maßnahmen gelingt eine Beherrschung des Galleproblems auf sehr zuverlässige und reproduzierbare Weise, ohne daß hierfür ein übertriebener Aufwand zu treiben wäre.

Durch die unterhalb der Galleschicht befindliche Bodenschicht von geschmolzenem Glas auch im Überlaufkanal wird der Überlaufkanal größtmöglich gegen die aggressive Wirkung der Galle geschützt. Durch das Vorhandensein des Wehrs am Ende des Überlaufkanals wird in diesem nicht nur flüssiges Glas sondern auch flüssige Galle bereitgehalten, die ohne langes "Auftauen" über das Wehr überlaufen kann.

Selbst bei einer intermittierenden Betriebsweise läßt sich der Galleaustritt durch die unmittelbare Strahlungsbeheizung der Galle extrem kurzfristig regeln, und zwar auch kontinuierlich regeln, da durch die Temperaturbeeinflußung der Galle deren Viskosität beeinflußt wird, so daß es zum Zwecke einer Verlangsamung des Galleaustritts nicht erforderlich ist, diese einzufrieren und alsdann mühsam wieder aufzutauen.

Es ist dabei im Zuge einer besonders vorteilhaften weiteren Ausgestaltung der Erfindung von Vorteil, wenn man die Galle im Überlaufkanal auf mindestens einem Teil ihres Strömungsweges durch Wärmestrahlung von oben beheizt.

Die hierfür erforderliche Temperaturdifferenz beträgt einige 100 °C, so daß durch eine exakte Temperatursteuerung ein automatisch arbeitender Galleauslauf erzielt werden kann, durch den der Austrag der Galle diskontinuierlich, vorzugsweise periodisch, vorgenommen werden kann.

Die Erfindung betrifft auch eine Vorrichtung zur Durchführung des Verfahrens mit einer elektrisch beheizbaren Wanne mit einer Auslaßöffnung für geschmolzenes Glas und mit einem mit der Wanne seitlich verbundenen beheizbaren Überlaufkanal, der eine Eintrittsöffnung für die Galle aufweist, wobei in der Wanne mindestens eine Einlaßvorrichtung für blasenbildende Gase angeordnet ist.

Zur Lösung der gleichen Aufgabe ist diese Vorrichtung erfindungsgemäß dadurch gekennzeichnet, daß diese Einlaßvorrichtung unmittelbar unterhalb des Überlaufkanals für die Galle angeordnet ist, daß am Ende des waagrechten Überlaufkanals ein Wehr für den Überlauf der Galle und für einen Rückstau von Glas angeordnet ist und daß oberhalb des Überlaufkanals eine Strahlungs-Heizeinrichtung angeordnet ist, durch die der Überlaufkanal für die Galle von oben beheizbar ist.

Es ist dabei im Zuge einer weiteren Ausgestaltung dieser Erfindung besonders vorteilhaft, wenn der Überlaufkanal in seinem Anfangsbereich auf seinem Umfang geschlossen ausgebildet ist und in seinem Endbereich unterhalb der Strahlungsheizeinrichtung nach oben offen ist, und wenn oberhalb des Überlaufkanals mindestens in seinem nach oben offenen Endbereich eine Strahlungs-Heizeinrichtung angeordnet ist, durch die die Oberfläche der Galleschicht beheizbar ist.

Auf diese Weise läßt sich eine besonders genaue Temperaturführung der Galleschicht erreichen.

Weitere vorteilhafte Ausgestaltungen des Erfindungsgegenstandes ergeben sich aus den übrigen Unteransprüchen.

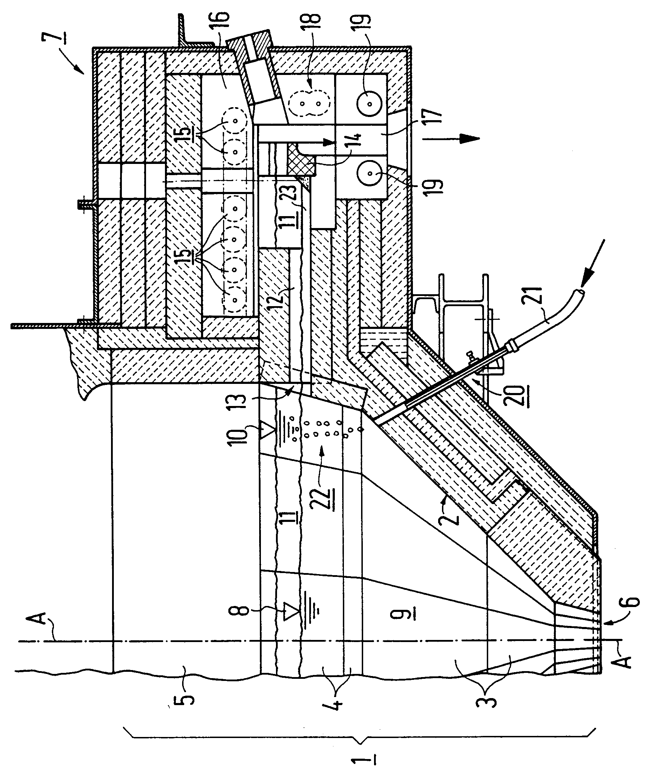

Ein Ausführungsbeispiel des Erfindungsgegenstandes wird nachfolgend anhand der einzigen Figur näher erläutert, die einen Vertikalschnitt durch eine Wanne und eine an diese angesetzte Einrichtung zum Abzug der Galle zeigt.

Gemäß der Figur besitzt die Wanne 1 eine Innenfläche 2, die zumindest im unteren Teil der Wanne aus aneinanderstoßenden Pyramidenstumpfflächen 3 und 4 zusammengesetzt ist. Diese Pyramidenstumpfflächen und eine sich daran nach oben hin anschließende Prismenfläche haben eine gemeinsame Achse A-A. Konzentrisch zu dieser Achse verläuft auch eine Abzugsöffnung 6 für das geschmolzene Glas bzw. für die verglasten Abfallstoffe und/oder für sich ansammelnde geschmolzene Metalle. Die für die Wanne 1 benötigten Energiequellen für die Zufuhr der Schmelzenergie und den Ausgleich der Temperaturverluste sind der Einfachheit halber nicht dargestellt, da solche Energiequellen bekannt sind. Es kann sich um Bodenelektroden, Top-Elektroden, aber auch um Brenner für fosile Brennstoffe handeln. Auch die gemischte Beheizung mit Elektroden und Brennern ist denkbar.

Die Wanne 1 besitzt aufgrund der Auslegungs- und Betriebsdaten zwei konstruktionsbedingte Flüssigkeitsstände, nämlich einen ersten Flüssigkeitsstand 8 für die Glasschmelze 9 und einen zweiten Flüssigkeitsstand 10 für eine auf der Glasschmelze 9 schwimmende Galleschicht 11.

Seitlich an die Wanne 1 angesetzt befindet sich eine Abzugseinrichtung 7 für die Galle 11, in der sich ein waagrechter Überlaufkanal 12 befindet, der eine Eintrittsöffnung 13 für die Galle und ein Wehr 14 für den Überlauf der Galle befindet. Dieser Überlaufkanal 12 ist in seinem Anfangsbereich auf seinem Umfang geschlossen ausgebildet und in seinem Endbereich nach oben offen. Oberhalb des Überlaufkanals 12 befindet sich in seinem nach oben offenen Endbereich eine Strahlungs-Heizeinrichtung 15, die aus zahlreichen parallelen und waagrechten stabförmigen Strahlungsheizkörpern besteht, die senkrecht zur Zeichenebene und quer zur Strömungsrichtung der Galle im Überlaufkanal 12 verlaufen.

Dadurch wird die Oberfläche der Galleschicht in dem nach oben offenen Endbereich des Überlaufkanals 15 beheizt und auf einer Temperatur gehalten, die einen sicheren Überlauf der Galle über das Wehr 14 ermöglicht.

Wie aus der Figur ersichtlich ist, liegen die beiden ersten Strahlungsheizkörper (in Strömungsrichtung der Galle betrachtet) oberhalb des nach oben geschlossenen Anfangsbereiches des Überlaufkanals 12, so daß auch dessen obere Wand auf einer solchen Temperatur gehalten wird, daß die Galle nicht einfrieren kann.

Wie weiterhin aus der Figur ersichtlich ist, ist die Strahlungs-Heizeinrichtung 15 in einer Heizkammer 16 angeordnet, die sich nicht nur über den nach oben offenen Teil des Überlaufkanals 12, sondern auch teilweise über den nach oben geschlossenen Teil des Überlaufkanals 12 erstreckt. Auch das Wehr 14 liegt im Wirkungsbereich der Strahlungs-Heizeinrichtung 15, wie sich unschwer aus der Figur ergibt.

An das Wehr 14 schließt sich ein senkrechter Auslaufkanal 17 für die Galle an, und dieser Auslaufkanal ist von weiteren Heizeinrichtungen 18 und 19 umgeben, die in entsprechend gestalteten Heizkammern untergebracht sind.

Als wesentlicher Teil der Erfindung befindet sich in der Wanne 1 unterhalb des Überlaufkanals 12 bzw. unterhalb von dessen Eintrittsöffnung 13 eine Einlaßvorrichtung 20, die aus einer (wie gezeigt) oder aus mehreren Gasdüsen besteht, die als "Bubbler" bezeichnet werden. Die Einlaßvorrichtung 20 wird über eine Leitung 21 mit einem Gas versorgt, das in der Glasschmelze 8 und in der Galleschicht 11 vor der Eintrittsöffnung 13 einen Strom von aufsteigenden Gasblasen 22 erzeugt, die in der Schmelze eine zwangsweise Aufstiegsbewegung erzeugen, durch die heißere Schmelze aus dem Bodenbereich der Wanne 1 zur Oberfläche und in die Galleschicht 11 transportiert werden. Zusammen mit der Glasschmelze werden auch etwaige in der Glasschmelze suspendierte Tropfen oder Tröpfchen von Galle nach oben transportiert, so daß sich diese mit der Galleschicht 11 vereinigen, die sich insbesondere im Bereich der Eintrittsöffnung 13 ansammelt. Beim Überschreiten des durch das Wehr 14 vorgegebenen Pegels kann die Galle 11 über den Auslaufkanal 17 austreten und in einem hier nicht gezeigten Behälter für eine weitere Entsorgung gesammelt werden. Dadurch, daß man im Überlaufkanal 12 eine Bodenschicht 23 aus geschmolzenem Glas auf einer solchen Temperatur hält, daß diese infolge ihrer hohen Viskosität nicht aus dem Überlaufkanal 12 austreten kann, andererseits aber die Galle 11 durch die besagte Heizeinrichtung 15 auf eine solche Temperatur aufheizt, daß die Galle in gut fließfähigem Zustand gehalten wird, kann ein gezieltes Auslaufen der Galle gewährleistet werden. Man kann in diesem Falle durch eine Veränderung der Heizleistung in Intervallen dafür Sorge tragen, daß ein intermittierender Galleaustritt möglich ist.

## Patentansprüche

1. Verfahren zum Schmelzen von Glas unter Bildung einer auf der Glasschmelze (9) schwimmenden Galleschicht (11) in elektrisch beheizten Wannen-Schmelzöfen mit einer Abzugsöffnung (6) für die Glasschmelze, insbesondere beim Verglasen von Schadstoffen aus der Gruppe Asbest, Flugasche, Filterstäube, mittels eines mit der Wanne (1) verbundenen Überlaufkanals (12) mit einer Eintrittsöffnung (13) für den Überlauf der Galle, wobei man in der Schmelze (9) einen Strom von aufsteigenden Gasblasen (22) erzeugt und dadurch eine Ansammlung von flüssiger Galle (11) herbeiführt, **dadurch gekennzeichnet**, daß man den Strom aufsteigender Gasblasen (22) unmittelbar vor dem Überlaufkanal (12) erzeugt und im Überlaufkanal (12) eine Schicht flüssiger Galle (11) und eine durch ein Wehr (14) zurückgehaltene Bodenschicht (23) von geschmolzenem Glas unterhält und im Überlaufkanal (12) eine Temperatur einstellt, die über der Schmelztemperatur der Galle (11) liegt, dabei aber die Bodenschicht (23) des Glases auf einer Temperatur hält, bei der die Viskosität des Glases so hoch ist, daß das Glas nicht aus dem Überlaufkanal (12) austritt.

2. Verfahren nach Anspruch 1, **dadurch gekennzeichnet**, daß man die Galle (11) im Überlaufkanal (12) auf mindestens einem Teil des Strömungsweges durch Wärmestrahlung von oben beheizt.

3. Verfahren nach Anspruch 1, **dadurch gekennzeichnet**, daß man die Heizleistung in Intervallen so verändert, daß ein intermittierender Galleaustritt erzeugt wird.

4. Vorrichtung zur Durchführung des Verfahrens nach Anspruch 1 mit einer elektrisch beheizbaren Wanne (1) mit einer Auslaßöffnung (6) für geschmolzenes Glas und mit einem mit der Wanne (1) seitlich verbundenen beheizbaren Überlaufkanal (12), der eine Eintrittsöffnung (13) für die Galle (11) aufweist, wobei in der Wanne (1) mindestens eine Einlaßvorrichtung (20) für blasenbildende Gase angeordnet ist, **dadurch gekennzeichnet**, daß diese Einlaßvorrichtung (20) unmittelbar unterhalb des Überlaufkanals (12) für die Galle (11) angeordnet ist, daß am Ende des waagrechten Überlaufkanals (12) ein Wehr (14) für den Überlauf der Galle (11) und für einen Rückstau von Glas angeordnet ist und daß oberhalb des Überlaufkanals (12) eine Strahlungs-Heizeinrichtung (15) angeordnet ist, durch die der Überlaufkanal (12) für die Galle (11) von oben beheizbar ist.

5. Vorrichtung nach Anspruch 4, **dadurch gekennzeichnet**, daß der Überlaufkanal (12) in seinem Anfangsbereich auf seinem Umfang geschlossen ausgebildet ist und in seinem Endbereich unterhalb der Strahlungs-Heizeinrichtung (15) nach oben offen ist.

6. Vorrichtung nach Anspruch 5, **dadurch gekennzeichnet**, daß sich die Strahlungs-Heizeinrichtung (15) zusätzlich über dem nach oben geschlossenen Anfangsbereich des Überlaufkanals (12) erstreckt.

7. Vorrichtung nach Anspruch 6, **dadurch gekennzeichnet**, daß die Strahlungs-Heizeinrichtung (15) in einer Heizkammer (16) angeordnet ist, die sich über den nach oben geschlossenen Teil des Überlaufkanals (12), über dem nach oben offenen Teil des Überlaufkanals (12) und über das Wehr (14) erstreckt.

8. Vorrichtung nach Anspruch 4, **dadurch gekennzeichnet**, daß sich an das Wehr (14) ein senkrechter Auslaufkanal (17) für die Galle (11) anschließt.

9. Vorrichtung nach Anspruch 8, **dadurch gekennzeichnet**, daß der senkrechte Auslaufkanal (17) für die Galle von weiteren Strahlungs-Heizeinrichtungen (18, 19) umgeben ist.

10. Vorrichtung nach Anspruch 4, **dadurch gekennzeichnet**, daß die Innenfläche (2) der Wanne (1) aus aneinanderstoßenden Kegelstumpf- oder Pyramidenstumpfflächen (3, 4) und aus einer Zylinderfläche (5) zusammengesetzt ist, die eine gemeinsame senkrechte Achse (A-A) aufweisen und daß die Einlaßvorrichtung (20) für die blasenbildenden Gase in einem schräg verlaufenden Teil der Innenfläche (2) angeordnet ist.
